# EUROPÄISCHE PATENTSCHRIFT

(11) **EP 3 280 615 B1**
(45) Veröffentlichungstag und Bekanntmachung des Hinweises auf die Patenterteilung: **17.06.2020**
(21) Anmeldenummer: 16720726.5
(22) Anmeldetag: 08.04.2016
(51) Int. Cl.: B60P 1/44

(54) **SYSTEM ZUR AUFNAHME VON GEGENSTÄNDEN**
SYSTEM FOR ACCOMMODATING OBJECTS
SYSTÈME DE RÉCEPTION D'OBJETS

(30) Priorität: 10.04.2015 DE 102015004394
(43) Veröffentlichungstag der Anmeldung: 14.02.2018
(73) Patentinhaber: Pro4Innovation UG, 21255 Tostedt (DE)
(72) Erfinder: LUDEWIGT, Thomas, 21244 Buchholz (DE); DELVENTHAL, André, 29643 Neuenkeirchen (DE); WILL, Lennart, 21337 Lüneburg (DE)
(74) Vertreter: Holz, Christian
(86) Internationale Anmeldenummer: PCT/EP2016/057805
(87) Internationale Veröffentlichungsnummer: WO 2016/162508

(56) Entgegenhaltungen:
- EP-A1- 2 574 499
- DE-A1- 4 112 017
- US-E- R E23 546

## Beschreibung

Die Erfindung betrifft ein System zur Aufnahme von Gegenständen gemäß dem Oberbegriff des Anspruchs 1.

Es sind verschiedenste Arten von Fahrzeugen zur Bewegung auf dem Land oder auf dem Wasser bekannt, die zum Wohnen bzw. zum Reisen, für Expeditionen sowie für spezielle Aufgaben und Einsätze etc. genutzt werden können. Dies können beispielsweise Wohnwagenanhänger und Wohnmobile als Freizeitfahrzeuge auf dem Lande sein. Als Nutzfahrzeuge an Land kommen Einsatzfahrzeuge der Feuerwehr, der Polizei, des Technischen Hilfswerks, der Bundeswehr etc. in Betracht. Zu Wasser können dies im Freizeitbereich Segelschiffe, Motoryachten etc. und für spezielle Aufgaben und Einsätze Schiffe der Feuerwehr, der Polizei, des Küstenwachse, des Zolls, der Deutschen Gesellschaft zur Rettung Schiffbrüchiger etc. sein.

Ein Ziel bei der Entwicklung bei Fahrzeugen allgemein und insbesondere bei den zuvor beschriebenen Fahrzeugen ist es, möglichst viel Nutz- und Stauraum zu schaffen, um möglichst viele Vorräte, Ersatzteile, Betriebsstoffe, Ausrüstungsgegenstände etc. bei der Verwendung mit sich führen zu können. Dies kann die Einsatzmöglichkeiten steigern. Insbesondere besteht häufig der Wunsch, Zusatzfahrzeuge oder mobile Geräte im Hauptfahrzeug mitführen zu können, die bei Bedarf dem Hauptfahrzeug entnommen und separat eingesetzt werden können. Diese Zusatzfahrzeuge können bei Landfahrzeugen im Freizeitbereich Fahrräder, Motorräder, Quads oder sogar kleine Personenkraftwagen (Pkw) sein. Auch kann dies z.B. ein Grill, ein Zeltanbau oder dergleichen sein. Bei Einsatzfahrzeugen auf dem Land können dies ebenfalls Motorräder oder Quads aber auch Notstromaggregate, Kräne, Pumpen, Absperrungen, Zeltanbauten und dergleichen sein. Bei Wasserfahrzeugen können dies Schlauchboote und Beiboote, zum Rudern oder mit Außenbordmotoren, kleine Motorboote bis hin zu kleineren Yachten sein, je nach Größe des Hauptwasserfahrzeugs.

Zu diesem Zweck ist es bei Wohnmobilen z.B. aus der DE 28 40 840 A1 bekannt, dass ein zusätzlicher Pkw im Heck des Wohnmobils aufgenommen werden kann. Dieser kann zum einem über eine ausfahrbare schräge Rampe aus dem Inneren herausgefahren werden, wobei zuerst die Rampe ausgefahren und an einem Ende am Boden abgesetzt wird und dann der Pkw von einer Person, die hierzu ins Innere des Pkws einsteigen muss, aus dem Heck des Wohnmobils herausgefahren werden muss. Dies kann sehr umständlich sein und erfordert eine ausreichende Breite des Aufnahmeraums, damit eine Person überhaupt in den Pkw einsteigen bzw. aus diesem aussteigen kann, wenn sich dieser noch im Wohnmobil befindet.

Zum anderen offenbart die DE 28 40 840 A1 alternativ auch, dass am Heck des Wohnmobils ein Lift vorhanden sein kann, der einen Tragrahmen aufweist, der auf den Boden abgesenkt werden kann. Der Lift kann im angehobenen Zustand mittels Laufkatzen und Seiltrommeln horizontal an einer Deckenaufhängung innerhalb des Wohnmobils verfahren werden. Auf diese Weise kann ein auf dem Tragrahmen befindlicher Pkw über die Hinterachse des Wohnmobils hinaus horizontal verfahren und dann vertikal auf den Boden abgesetzt werden. Hierbei ist nachteilig, dass das Absenken des Tragrahmens im Wesentlichen innerhalb der Außenmaße des Wohnmobils erfolgen muss, weil der Lift aufgrund der Deckenaufhängung nur innerhalb des Wohnmobils horizontal verfahrbar ist. Hierdurch muss zum Absenken der Tragaufnahme der Boden des Wohnmobils im Bereich des Aufnahmeraums teilweise fehlen, was die Konstruktion des Wohnmobils signifikant beeinflusst, oder teilweise entfernbar sein, was den Aufwand zur Umsetzung dieses Systems erhöht. Auch kann eine Seilkonstruktion bei freizugänglichen Seilen für den Bediener gefährlich sein. Insgesamt stellt dieser Mechanismus eine aufwändige Lösung dar.

Die DE 199 28 646 A1 betrifft eine Pkw-Laderampe für Reisemobile, bei als schräge Ebene ausgebildet ist und einen Pkw als Zusatzfahrzeug aufnehmen kann. Die Pkw-Laderampe ist mittels einer Hebe- und Senkvorrichtung am Chassis des Reisemobils angeordnet, so dass sie schräg aus dem Reisemobil zum Boden hin ausgefahren werden und dann auf dem Boden abrollen kann, bis die Pkw-Laderampe flach auf dem Boden aufliegt. Auf diese Weise kann der Benutzer bequem in den Pkw einsteigen, nachdem dieser vom Reisemobil vollständig freigegeben wurde. Nachteilig ist hierbei, dass durch die schräge Anordnung der Pkw-Laderampe im Heck des Reisemobils Nutz- und Stauraum unterhalb der Pkw-Laderampe verschwendet wird. Auch muss der Pkw auf der Pkw-Laderampe gut gesichert sein, weil er sich stets in einer abschüssigen Position befindet. Das Entfernen dieser Sicherung stellt einen zusätzlichen Schritt dar, um den Pkw der Pkw-Laderampe entnehmen zu können. Ferner ist eine aufwendige Kraftübertragung zum Ende der Hebe- und Senkvorrichtung erforderlich, weil hier die Verbindung zur Pkw-Laderampe besteht, der entsprechende Antrieb jedoch aus Platzgründen weiter Vorne im Reisemobil untergebracht werden muss.

Von der Firma ACTION MOBIL GmbH&Co.KG ist es bekannt, am Heck von Allrad-Wohnmobilen und Expeditionsfahrzeugen eine absenkbare Plattform vorzusehen, wie sie von Lastkraftwagen (Lkw) als Ladebordwand oder Hubladebühne bekannt ist. Als Ladebordwand wird die hintere Bordwand eines Lkw bezeichnet, die sich für ein leichteres Be- und Entladen von Frachtgut auf das Fahrbahnniveau absenken lässt. In diesem Fall der Allrad-Wohnmobile und Expeditionsfahrzeuge kann auf die horizontal abgesenkte Plattform ein Pkw aus dem Inneren des Hauptfahrzeugs heraufgefahren und dann abgesenkt werden. Nachteilig ist hierbei, dass für diese Art des Absenkens eine massive Konstruktion erforderlich ist, da die Plattform das gesamte Gewicht des Pkw tragen, absenken und anheben können müssen. Die Plattform als Ladebordwand liegt im abgesenkten Zustand schräg auf dem Boden auf, so dass auch das Zusatzfahrzeug schräg steht. Auch ist die Plattform im hochgeklappten Zustand außen am Hauptfahrzeug sichtbar, was den optischen Eindruck beeinträchtigen kann.

Aus der DE 10 2007 035 143 A1 ist ein Wohnmobil bekannt, welches eine Aufnahme für z.B. einen Pkw aufweist, wobei die Aufnahme zwischen zwei Achsen des Wohnmobils absenkbar angeordnet und quer zur Längsachse des Wohnmobils verfahrbar ist. Auf diese Art und Weise kann ein Pkw in der Aufnahme aufgenommen und angehoben mit dem Wohnmobil mit transportiert werden. Soll dieser genutzt werden, so kann die Aufnahme auf den Boden abgesenkt und seitlich herausgefahren werden, so dass eine Person außerhalb des Wohnmobils in den Pkw einsteigen kann. Nachteilig ist hierbei, dass der Boden ein seitliches Verfahren zulassen muss, um diesen Mechanismus nutzen zu können. Dementsprechend ist dieser Mechanismus eher für den Einsatz auf Parkplätzen etc. geeignet und steht auf Wiesen und ähnlichen weichen Untergründen nicht zur Verfügung, was die Nutzung für Wohnmobile einschränkt und für Expeditionsfahrzeuge und Einsatzfahrzeuge weitestgehend ausschließt. Auch ist die Anordnung dieser Aufnahme am Wohnmobil nur zwischen den Achsen möglich. Die DE 201 19 560 U1 betrifft eine Ladehilfsvorrichtung, um das Be- und Entladen von Pkw-Kombis, Vans, Kleintransportern, Anhängern und ähnlichen Fahrzeugen mit schweren oder unhandlichen Gütern und den Zugriff auf diese zu erleichtern. Die Ladehilfsvorrichtung weist ein Paar Schienen auf, welche im Inneren eines z.B. Kofferraums eines Fahrzeugs angeordnet werden können. Die Ladehilfsvorrichtung weist ferner zwei Lineareinheiten auf, welche an den Schienen geführt werden können. Die Lineareinheiten können in der Horizontalen verschoben werden. Die beiden Lineareinheiten sind in Querrichtung mit einem Querträger verbunden. An dem Querträger können Lastaufnahmeeinrichtungen befestigt werden, welche sich vertikal absenken lassen.

Schließlich ist auch die DE 41 12 017 A1 bekannt, welche ein System zur Aufnahme von Gegenständen gemäß des Oberbegriffs des Anspruchs 1 offenbart. Sie wird als nächstliegender Stand der Technik betrachtet.

Eine Aufgabe der vorliegenden Erfindung ist es, ein System zur Aufnahme von Gegenständen wie z.B. zusätzlichen Fahrzeugen der eingangs beschriebenen Art bereit zu stellen, dass einfacherer, sicherer und bzw. oder günstiger als bekannte derartige Systeme ist. Insbesondere soll dieses System kompakt aufgebaut sein, um den Platzbedarf zu minimieren. Insbesondere soll dieses System das äußere Erscheinungsbild z.B. eines Fahrzeugs, bei dem das System eingesetzt wird, nicht bzw. möglichst wenig beeinflussen. Die Aufgabe wird erfindungsgemäß durch die Merkmale des kennzeichnenden Teils des Anspruchs 1 gelöst. Vorteilhafte Weiterbildungen sind in den Unteransprüchen beschrieben. Somit betrifft die vorliegende Erfindung ein System zur Aufnahme von Gegenständen. Als Gegenstände kommen alle mobilen Objekte in Betracht, die in einem anderen mobilen oder stationären Objekt aufgenommen werden können sollen. Insbesondere werden unter Gegenständen kleine Fahrzeuge wie z.B. Motorräder, Quads oder Pkws verstanden, die z.B. in einem Wohnmobil oder dergleichen aufgenommen werden sollen, d.h. dort verstaut und transportiert werden sollen, um sie bei Bedarf einfach, bequem und sicher entnehmen zu können. Auch können diese Gegenstände kleine Beiboote etc. sein, die von größeren Schiffen wie insbesondere Yachten aufgenommen werden können sollen. Im stationären Fall kann dies ein Regallager sein, in dem Gegenstände aufgenommen werden können sollen.

Das System weist eine Führungsbaugruppe auf, welche stationär angeordnet werden kann. Unter stationärer Anordnung wird dabei die feststehende Befestigung an einem mobilen oder stationären Objekt wie vorzugsweise an bzw. in einem Wohnmobil verstanden. Die Führungsbaugruppe kann somit eine feststehende Verbindung der beweglichen Baugruppen des Systems zu z.B. einem Wohnmobil herstellen.

Das System weist ferner eine erste Bewegungsbaugruppe auf, welche mit der Führungsbaugruppe verbunden ist und welche gegenüber der Führungsbaugruppe in Richtung einer Längsachse horizontal beweglich sein kann. Die erste Bewegungsbaugruppe kann somit gegenüber der Führungsbaugruppe eine relative horizontale Bewegung in einer Richtung, nämlich entlang der Längsachse, ausführen. Diese Bewegung kann über einen Antrieb wie z.B. einen Spindelantrieb oder einen hydraulischen Antrieb ausgeführt werden, welche vorzugsweise stationär, d.h. an der Führungsbaugruppe, angeordnet sein können. Vorzugsweise kann die Bewegung über einen Riementrieb ausgeführt werden, wobei der Riemen vorzugsweise fest im Fahrzeug installiert und der Antrieb, vorzugsweise ein Elektromotor, fest an der ersten Bewegungsbaugruppe angeordnet ist. Mittels des Antriebes kann sich die erste Bewegungsbaugruppe über den Riemen aus dem Fahrzeug herausziehen bzw. in das Fahrzeug hineinziehen.

Das System weist ferner eine zweite Bewegungsbaugruppe auf, welche mit der ersten Bewegungsgruppe verbunden ist und welche gegenüber der ersten Bewegungsbaugruppe in Richtung einer Hochachse vertikal beweglich sein und die Gegenstände aufnehmen kann. Die zweite Bewegungsbaugruppe kann somit gegenüber der ersten Bewegungsbaugruppe eine relative vertikale Bewegung ausführen und die Gegenstände aufnehmen, die mittels des Systems aufgenommen, transportiert bzw. abgegeben werden sollen.

Erfindungsgemäß ist nunmehr vorgesehen, dass die erste Bewegungsbaugruppe in Richtung der Längsachse soweit über die Führungsbaugruppe hinaus bewegt werden kann, dass die zweite Bewegungsbaugruppe gegenüber der ersten Bewegungsbaugruppe an der Führungsbaugruppe vorbei in Richtung der Hochachse bewegt werden kann. Mit anderen Worten kann die zweite Bewegungsbaugruppe horizontal so weit über die Außenmaße der Führungsbaugruppe hinaus aus z.B. dem Wohnmobil herausgefahren werden, dass sie in der Höhe frei beweglich ist. Hierdurch kann die zweite Bewegungsbaugruppe an der Führungsbaugruppe vorbei abgesenkt und angehoben werden, ohne durch die Führungsbaugruppe in dieser Bewegung eingeschränkt zu werden.

Soll somit ein aufgenommener Gegenstand freigegeben werden, kann die erste Bewegungsbaugruppe samt zweiter Bewegungsbaugruppe und dort aufgenommenem Gegenstand aus einem horizontal eingefahrenen Zustand gegenüber der Führungsbaugruppe in einen horizontal ausgefahrenen Zustand bewegt werden, in dem die zweite Bewegungsbaugruppe in horizontaler Richtung über die äußeren Abmaße der Führungsbaugruppe hinausragt. In dieser Position befindet sich die zweite Bewegungsbaugruppe in einem vertikal eingefahrenen Zustand, aus dem sie durch Absenken in vertikaler Richtung bis zum Boden in einen vertikal ausgefahrenen Zustand überführt werden kann. Dann kann der Gegenstand entnommen werden. Das Aufnehmen eines Gegenstandes kann in umgekehrter Reihenfolge erfolgen.

Vorteilhaft ist hierbei, dass eine einfache Bewegung realisiert werden kann, indem ein rein horizontales Verfahren der ersten und zweiten Bewegungsbaugruppe gemeinsam gegenüber der Führungsbaugruppe und ein rein vertikales Verfahren der zweiten Bewegungsbaugruppe gegenüber der ausgefahrenen ersten Bewegungsbaugruppe erfolgen kann. Somit können beide Bewegungsbaugruppen auf die jeweilige Bewegung optimiert werden, was die Umsetzung einfacher und sicherer macht. Auch kann auf schräge oder kombinierte Bewegungen verzichtet werden, was die erforderliche Kinematik und Steuerung sowie Antriebe komplizierter machen könnte.

Vorteilhaft ist hierbei auch, dass die seitliche Bewegung oberhalb des Untergrunds, auf dem der Gegenstand abgesetzt bzw. von dem der Gegenstand aufgenommen werden soll, d.h. in der Luft, erfolgen kann. Hierdurch ist der Untergrund, d.h. der Boden, für die Durchführung dieser Bewegungen nicht relevant. Mit anderen Worten kann das erfindungsgemäße System unabhängig vom Untergrund, auf dem sich z.B. das Wohnmobil befindet, genutzt werden.

Vorteilhaft ist weiterhin, dass der Aufbau des Systems kompakt erfolgen kann, weil die einzelnen Bewegungen nacheinander, rechtwinkelig zueinander und einfach ablaufen können. Hierdurch kann Platz gespart werden, was bei den zuvor beschriebenen Fahrzeugen jeweils sehr relevant sein kann. Mit anderen Worten kann eine Verschwendung von Volumen im Inneren des Fahrzeugs durch den kompakten Aufbau des erfindungsgemäßen Systems und seine rechtwinkeligen Bewegungsabläufe vermieden werden.

Vorteilhaft ist auch, dass zur Aufnahme bzw. Entnahme der Gegenstände kein separates Gerät wie z.B. Gabelstapler oder Kräne erforderlich ist, weil alle erforderlichen Hub- und Senkmechanismen in dem System selbst integriert sind.

Vorteilhaft ist weiterhin, dass die für den Bewegungsablauf erforderlichen Antrieben und Mechaniken vollständig im Inneren des Fahrzeugs angeordnet werden und von außen verborgen bleiben können. Hierdurch kann eine Störung des Anblicks z.B. eines Wohnmobils oder einer Yacht vermieden werden.

Vorteilhaft ist ferner, dass bei dem erfindungsgemäßen System die aufgenommenen Gegenstände auch nur einzeln entnommen werden können. Hierzu kann das System vollständig ausgefahren und auf den Boden abgesenkt werden, so dass alle aufgenommenen Gegenstände von allen Seiten übersichtlich optisch erfasst und einzeln entnommen bzw. anders angeordnet werden können. Auch ist es auf diese Art und Weise möglich, das System lediglich horizontal auszufahren, so dass die aufgenommenen Gegenstände auch vergleichsweise einfach zugänglich sind, jedoch nicht mit einem z.B. nassen oder schmutzigen Boden in Kontakt kommen können bzw. müssen. In beiden Fällen kann vermieden werden, dass eine Person in einen Laderaum oder dergleichen z.B. hineinkriechen muss, um an gesuchte Gegenstände zu gelangen. In diesem Fall könnte es auch erforderlich sein, einzelne Gegenstände erst umräumen bzw. aus dem Aufnahmeraum herausräumen zu müssen, um an den gesuchten Gegenstand zu gelangen, was bei einer frei zugänglich präsentierten zweiten Bewegungsbaugruppe gemäß der vorliegenden Erfindung vermieden werden kann. Ferner kann auf diese Art und Weise auch auf Ladesicherungssysteme verzichtet werden können, da die Gegenstände auf der zweiten Bewegungsbaugruppe im Inneren des Fahrzeugs eingeschlossen werden können. Dies kann die Fahrzeugsicherheit erhöhen.

Vorzugsweise ist die Aufnahme der zweiten Bewegungsbaugruppe derart ausgestaltet, dass sie den Gegenstand bzw. die Gegenstände aufgrund ihrer Kontur sicher aufnehmen und auch halten kann. Hierdurch kann auf zusätzliche Sicherungsmittel verzichtet bzw. kann die Sicherung unterstützt werden. Beispielsweise können Vertiefungen vorgesehen sein, in denen die Räder eines Pkw zum Stehen kommen und in ihrer Rollrichtung behindert werden können. Bei Beibooten kann die Kontur der Aufnahme der Kontur der Unterseite des Beibootes entsprechen, so dass das Beiboot beim Anheben aus dem Wasser umgriffen und hierdurch gesichert werden kann. Hierdurch kann z.B. bei der Anwendung der Erfindung auch Yachten auf Gurte und Kräne verzichtet werden, die sehr aufwändig zu handhaben sind und den Anblick einer Yacht sehr stören können.

Die Elemente des Systems können teilweise oder vollständig aus Metall, insbesondere aus Stahl, oder aus Kunststoff, insbesondere aus faserverstärktem Kunststoff, sein.

Gemäß einem Aspekt der vorliegenden Erfindung weist die erste Bewegungsbaugruppe einen horizontalen Rahmenteil und einen vertikalen Rahmenteil auf, wobei der horizontale Rahmenteil der ersten Bewegungsbaugruppe die erste Bewegungsbaugruppe in Richtung der Längsachse beweglich mit der Führungsbaugruppe verbindet und wobei der vertikale Rahmenteil der ersten Bewegungsbaugruppe die zweite Bewegungsbaugruppe in Richtung der Hochachse beweglich mit der ersten Bewegungsbaugruppe verbindet. Mit anderen Worten stellt die erste Bewegungsgruppe über ihren horizontalen Rahmenteil eine horizontal bewegliche Verbindung für sich selbst sowie die zweite Bewegungsbaugruppe zur Führungsbaugruppe her. Die zweite Bewegungsbaugruppe ihrerseits ist gegenüber der ersten Bewegungsbaugruppe über dessen vertikalen Rahmenteil vertikal beweglich.

Auf diese Weise kann erreicht werden, dass die zweite Bewegungsbaugruppe sowie die hierdurch aufgenommenen Gegenstände mittels der ersten Bewegungsbaugruppe gegenüber der stationären Führungsbaugruppe zuerst horizontal bewegt werden können, um diese z.B. aus dem Inneren eines Wohnmobils nach außen aber gegenüber dem Boden angehoben zu transportieren. Danach kann die Absenkung der zweiten Bewegungsbaugruppe gegenüber der ersten ausgefahrenen Bewegungsbaugruppe erfolgen, um die Gegenstände auf dem Boden abzusetzen. Hierdurch kann sozusagen über die erste Bewegungsbaugruppe eine Transformation von horizontaler zu vertikaler Bewegung zwischen der Führungsbaugruppe und der zweiten Bewegungsbaugruppe erfolgen. Gemäß einem weiteren Aspekt der vorliegenden Erfindung sind der horizontale Rahmenteil der ersten Bewegungsbaugruppe und der vertikale Rahmenteil der ersten Bewegungsbaugruppe durch ein diagonales Verbindungselement, vorzugsweise durch ein Paar von diagonalen Verbindungselementen, miteinander verbunden. Über dieses diagonale Verbindungselement kann eine diagonale Kraftübertragung erfolgen, so dass die Kräfte und Momente, die aufgrund der zweiten Bewegungsbaugruppe und der dort aufgenommenen Gegenstände auf den vertikalen Rahmenteil der ersten Bewegungsbaugruppe wirken können, zumindest teilweise, vorzugsweise großteils, auf den horizontalen Rahmenteil der ersten Bewegungsbaugruppe übertragen werden können. Dies verbessert die Stabilität der ersten Bewegungsbaugruppe bzw. verringert deren Gewicht bei gleicher Stabilität. Vorzugsweise sind die diagonalen Verbindungselemente als diagonale Streben ausgebildet. Durch die paarweise Anordnung der diagonalen Verbindungselemente kann die seitliche Stabilität erhöht und ein Verkanten bei der horizontalen Bewegung vermieden werden.

Erfindungsgemäß sind der horizontale Rahmenteil der ersten Bewegungsbaugruppe und der vertikale Rahmenteil der ersten Bewegungsbaugruppe durch eine Drehverbindung miteinander verbunden, so dass der horizontale Rahmenteil der ersten Bewegungsbaugruppe zwischen der Richtung der Längsachse und der Richtung der Hochachse gegenüber dem vertikalen Rahmenteil der ersten Bewegungsbaugruppe geschwenkt werden kann. Diese Drehverbindung kann z.B. über ein Scharnier oder mittels Bolzen realisiert sein. Vorzugsweise sind diese paarweise angeordnet, um ein Verkanten zu vermeiden.

Diese Drehverbindung ermöglicht es, den horizontalen Rahmenteil im eingefahrenen Zustand des Systems in die vertikale Richtung hochzuklappen. Dies kann dadurch ermöglicht werden, indem beim Einfahren das Gewicht der zweiten Bewegungsbaugruppen zunehmend direkt auf die Führungsbaugruppe übertragen und der horizontale Rahmenteil der ersten Bewegungsbaugruppe hierdurch soweit entlastet werden kann, dass dieser schließlich lastfrei hochgeklappt werden kann. Dies kann den erforderlichen Bauraum in Richtung der Längsachse erheblich verringern, der für dieses System erforderlich ist.

Gemäß einem weiteren Aspekt der vorliegenden Erfindung ist das Verbindungselement verkürzbar ausgebildet. Hierunter ist zu verstehen, dass das Verbindungselement nicht starr sondern in der Länge reduzierbar, z.B. einklappbar als Scharniermechanismus, ausgebildet ist, so dass das Verbindungselement zweiteilig mittels eines Scharniers zusammengeklappt werden kann. Auch kann das Verbindungselement als Seil, insbesondere als Stahlseil, ausgebildet sein. In allen Fällen weist das Verbindungselement dann seine maximale Länge, vorzugsweise in diagonaler Richtung zwischen dem horizontalen und vertikalen Rahmenteilen, auf, wenn sich der horizontale Rahmenteil der ersten Bewegungsbaugruppe heruntergeklappt in der Horizontalen befindet. Hierdurch kann eine größtmögliche Kraftübertragung während des Bewegungsablaufs erfolgen. Gleichzeitig kann der horizontale Rahmenteil der ersten Bewegungsbaugruppe vertikal hochgeklappt werden können.

Gemäß einem weiteren Aspekt der vorliegenden Erfindung weist der horizontale Rahmenteil der ersten Bewegungsbaugruppe wenigstens zwei Führungselemente, vorzugsweise zwei Rollen, auf, mit denen der horizontale Rahmenteil der ersten Bewegungsbaugruppe beweglich mit der Führungsbaugruppe verbunden ist. Hierdurch kann einfach und zuverlässig die gewünschte relative Beweglichkeit erfolgen.

Vorzugsweise kann eine Rolle mit dem horizontalen Rahmenteil zusammen vertikal hochgeklappt werden, um die Länge der ersten Bewegungsbaugruppe in Richtung der Längsachse zu verringern. Im heruntergeklappten Zustand kann diese Rolle den wesentlichen Teil des Gewichts der beiden Bewegungsbaugruppen auf die Führungsbaugruppe übertragen, weil es am weitesten innenliegen im Wohnmobil bzw. der Führungsschiene angeordnet ist, d.h. das größte Moment erfahren kann. Die zweite Rolle kann durchgängig horizontal in der Führungsschiene geführt werden und im horizontal ausgefahrenen Zustand den Drehpunkt der Momente und Kräfte darstellen, die von der zweiten Bewegungsbaugruppe auf die Führungsbaugruppe zu übertragen sind.

Gemäß einem weiteren Aspekt der vorliegenden Erfindung weist die Führungsbaugruppe wenigstens eine Führungsschiene, vorzugsweise ein Paar von Führungsschienen, auf, in der die erste Bewegungsbaugruppe, vorzugsweise die Rollen der ersten Bewegungsbaugruppe, beweglich geführt werden kann bzw. können. Hierdurch kann einfach und zuverlässig die gewünschte relative Beweglichkeit ermöglicht werden, indem die Rollen auf der Führungsschiene abrollen und hierdurch leichtgängig und sicher geführt bewegen können. Vorzugsweise kann ein Führungsschienenpaar verwendet werden, um eine bessere Verteilung der Kräfte zu ermöglichen und hierdurch ein Verkanten vermeiden zu helfen.

Dabei ist unter einer Führung der ersten Bewegungsbaugruppe "in" der Führungsschiene zu verstehen, dass eine relative sichere Führung erfolgt. Diese Führung kann daher auch umfassen, dass die erste Bewegungsbaugruppe an oder auf der Führungsschiene bzw. um die Führungsschiene herum beweglich angeordnet werden kann.

Gemäß einem weiteren Aspekt der vorliegenden Erfindung ist bzw. sind die Führungsschiene(n) U-förmig ausgebildet. Somit kann die Schiene der Führungsbaugruppe die Rollen der ersten Bewegungsbaugruppe nicht nur von unten abstützen sondern auch seitlich führen und von oben umgreifen und hierdurch halten. Das Umgreifen von oben ist besonders vorteilhaft, weil hierdurch ein Kippen der beiden Bewegungsbaugruppen im horizontal ausgefahrenen Zustand vermieden werden kann. Hierdurch kann einfach und zuverlässig die gewünschte relative Beweglichkeit erfolgen. Mit anderen Worten kann die U-förmige Führungsschiene die Rollen seitlich umgreifen und hierdurch die Stabilität der Bewegung deutlich verbessern. Dies gilt insbesondere dann, wenn ein Paar von U-förmigen Führungsschienen eingesetzt wird, die vorzugsweise mit ihren Öffnungen zueinander ausgerichtet angeordnet sind.

Gemäß einem weiteren Aspekt der vorliegenden Erfindung ist bzw. sind die Führungsschiene(n) abschnittsweise in Richtung der Hochachse hochgebogen ausgebildet. Hierdurch kann eine Umlenkung der Bewegung des horizontalen Rahmenteils der ersten Bewegungsbaugruppe gegenüber der Führungsbaugruppe von horizontaler Bewegung zu vertikaler Bewegung ermöglicht werden, um den horizontalen Rahmenteil der ersten Bewegungsbaugruppe beim Einfahren hochklappen zu können.

Gemäß einem weiteren Aspekt der vorliegenden Erfindung weist die zweite Bewegungsbaugruppe einen vertikalen Rahmenteil und einen horizontalen Rahmenteil auf, wobei der vertikale Rahmenteil der zweiten Bewegungsbaugruppe die zweite Bewegungsbaugruppe in Richtung der Hochachse beweglich mit der ersten Bewegungsbaugruppe verbindet und wobei der horizontale Rahmenteil der zweiten Bewegungsbaugruppe zur Aufnahme von Gegenständen ausgebildet ist. Vorzugsweise sind die beiden vertikalen Rahmenteile der beiden Bewegungsbaugruppen miteinander verbunden. Hierdurch kann das Absenken und Anheben des horizontalen Rahmenteils der zweiten Bewegungsbaugruppe, der den zu handhabenden Gegenstand aufnehmen kann, ermöglicht werden.

Gemäß einem weiteren Aspekt der vorliegenden Erfindung ist der vertikale Rahmenteil der zweiten Bewegungsbaugruppe gegenüber der ersten Bewegungsbaugruppe, insbesondere gegenüber dem vertikalen Rahmenteil der ersten Bewegungsbaugruppe, mittels eines Spindelantriebs oder eines hydraulischen Antriebs beweglich. Über diese Antriebe kann eine hohe Kraft bei kompaktem Aufbau erzeugt werden. Insbesondere lassen sich beide Arten von Antrieben in vertikaler Richtung in den vertikalen Rahmenteil der ersten Bewegungsbaugruppe integrieren, so dass sie nicht mit der zweiten Bewegungsbaugruppe mitbewegt werden müssen. Auch können diese Antriebe auf diese Art und Weise vor dem Betrachter verborgen angeordnet werden, was den optischen Eindruck des Systems verbessern kann.

Gemäß einem weiteren Aspekt der vorliegenden Erfindung ist der vertikale Rahmenteil der zweiten Bewegungsbaugruppe innerhalb des vertikalen Rahmenteils der ersten Bewegungsbaugruppe in der Richtung der Hochachse beweglich angeordnet. Dies kann einen kompakten Aufbau bei vertikaler Beweglichkeit ermöglichen. Auch können diese Antriebe dann vor dem Betrachter verborgen angeordnet werden, was den optischen Eindruck des Systems verbessern kann.

Gemäß einem weiteren Aspekt der vorliegenden Erfindung sind der vertikale Rahmenteil der zweiten Bewegungsbaugruppe und der horizontale Rahmenteil der zweiten Bewegungsbaugruppe durch ein diagonales Verbindungselement, vorzugsweise durch ein Paar von diagonalen Verbindungselementen, miteinander verbunden. Über dieses diagonale Verbindungselement kann eine diagonale Kraftübertragung erfolgen, so dass die Kräfte und Momente, die aufgrund des horizontalen Rahmenteils der zweiten Bewegungsbaugruppe und der dort aufgenommenen Gegenstände auf den vertikalen Rahmenteil der zweiten Bewegungsbaugruppe wirken können, zumindest teilweise, vorzugsweise großteils, auf den vertikalen Rahmenteil der zweiten Bewegungsbaugruppe übertragen werden können. Dies verbessert die Stabilität der zweiten Bewegungsbaugruppe bzw. verringert deren Gewicht bei gleicher Stabilität. Vorzugsweise sind die diagonalen Verbindungselemente als diagonale Streben ausgebildet.

Gemäß einem weiteren Aspekt der vorliegenden Erfindung weist der vertikale Rahmenteil der ersten Bewegungsbaugruppe wenigstens eine vertikale Aussparung, vorzugsweise ein Paar vertikaler Aussparungen, auf, in der ein Vorsprung, vorzugsweise in denen Vorsprünge, des vertikalen Rahmenteils der zweiten Bewegungsbaugruppe vertikal beweglich verlaufen kann bzw. können, wobei das diagonale Verbindungselement über den Vorsprung mit dem vertikalen Rahmenteil der zweiten Bewegungsbaugruppe verbunden ist. Hierdurch wird eine kompakte und sichere Führung des vertikalen Rahmenteils der zweiten Bewegungsbaugruppe in dem vertikalen Rahmenteil der ersten Bewegungsbaugruppe ermöglicht, wobei gleichzeitig die Kraftübertragung über das diagonale Verbindungselement erfolgen kann, um dessen Vorteile zu nutzen.

Gemäß einem weiteren Aspekt der vorliegenden Patentanmeldung weist die zweite Bewegungsbaugruppe, vorzugsweise der horizontale Rahmenteil der zweiten Bewegungsbaugruppe, eine Mehrzahl von Bewegungselementen, vorzugsweise eine Mehrzahl von Rollen, auf, mittels derer die zweite Bewegungsbaugruppe gegenüber der Führungsbaugruppe in Richtung der Längsachse beweglich geführt werden kann. Dies ermöglicht im eingefahrenen Zustand eine geführte und abgestützte Bewegung der zweiten Bewegungsbaugruppe gegenüber der Führungsbaugruppe. Dies ist vorteilhaft, weil die erste Bewegungsbaugruppe dann nicht das volle Gewicht der zweiten Bewegungsbaugruppe auf die Führungsbaugruppe übertragen können muss und hierdurch ggfs. dessen horizontaler Rahmenteil im eingefahrenen Zustand hochgeklappt werden kann.

Ein Ausführungsbeispiel und weitere Vorteile der Erfindung werden nachstehend im Zusammenhang mit den folgenden Figuren erläutert. Darin zeigt:
- Fig. 1: eine perspektivische schematische Darstellung eines erfindungsgemäßen Systems in einem horizontal vollständig ausgefahrenen Zustand;
- Fig. 2: die Darstellung der Fig. 1 ohne Führungsbaugruppe;
- Fig. 3: eine seitliche schematische Darstellung eines erfindungsgemäßen System in einem vollständig eingefahrenen Zustand;
- Fig. 4: eine seitliche schematische Darstellung eines erfindungsgemäßen System in einem horizontal teilweise ausgefahrenen Zustand;
- Fig. 5: eine seitliche schematische Darstellung eines erfindungsgemäßen System in einem horizontal vollständig ausgefahrenen Zustand; und
- Fig. 6: eine seitliche schematische Darstellung eines erfindungsgemäßen System in einem vertikal vollständig ausgefahrenen Zustand.

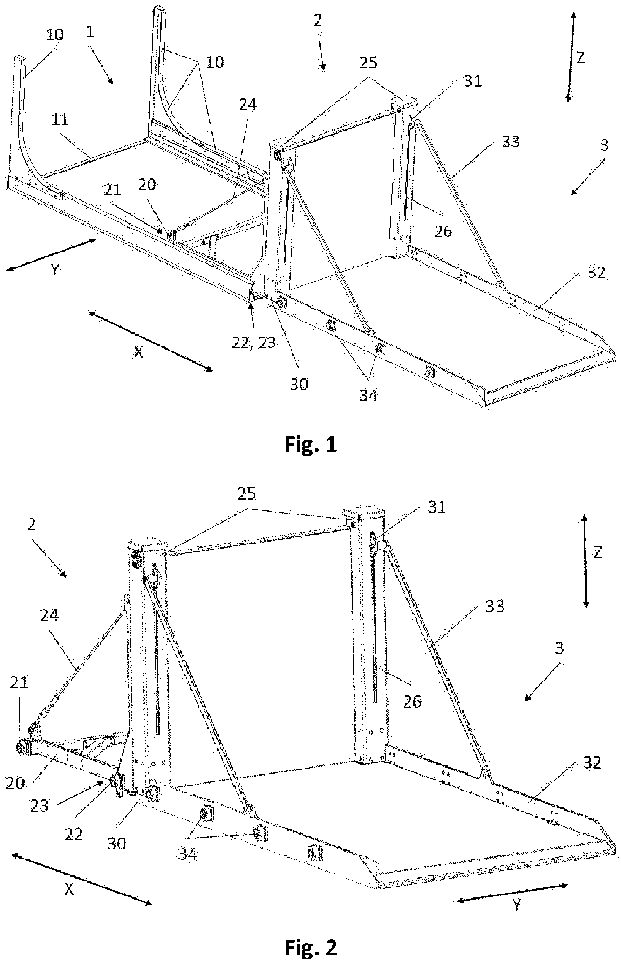

Die Fig. 1 zeigt eine perspektivische schematische Darstellung eines erfindungsgemäßen Systems 1, 2, 3 in einem horizontal vollständig ausgefahrenen Zustand. Die Fig. 2 zeigt die Darstellung der Fig. 1 ohne Führungsbaugruppe 1. Das erfindungsgemäße System 1, 2, 3 weist eine Führungsbaugruppe 1, eine erste Bewegungsbaugruppe 2 und eine zweite Bewegungsbaugruppe 3 auf.

Die Führungsbaugruppe 1 weist ein Paar von Führungsschienen 10 auf, die U-förmig ausgebildet und derart parallel zueinander angeordnet sind, dass die offenen Seiten ihrer U-Profile zueinander hin ausgerichtet sind. Die Führungsschienen 10 erstreckten sich im Wesentlichen in Richtung einer Längsachse X, wobei die beiden Führungsschienen 10 an einem Ende um 90° hochgebogen sind und sich vertikal in Richtung einer Hochachse Z erstrecken, die senkrecht zur Längsachse X verläuft. In Richtung einer Querachse Y, die sowohl senkrecht zur Längsachse X als auch senkrecht zur Hochachse Z verläuft, sind die beiden Führungsschienen 10 durch seitliche Verbindungselemente 11 zueinander beabstandet.

Die erste Bewegungsgruppe 2 weist einen horizontalen Rahmenteil 20 und einen vertikalen Rahmenteil 25 auf. Der horizontale Rahmenteil 20 erstreckt sich im Wesentlichen in Richtung der Längsachse X und der Querachse Y zwischen den Führungsschienen 10. In Richtung der Querachse Y jeweils seitlich außen weist der horizontale Rahmenteil 20 ein erstes Führungselement 21, welches dem gebogenen Ende der Führungsschienen 10 zugewandt ist, und ein zweites Führungselement 22, welches dem vertikalen Rahmenteil 25 zugewandt ist, auf. Die Führungselemente 21, 22 sind als Rollen 21, 22 ausgebildet, welche jeweils paarweise angeordnet sind. Die Rollen 21, 22 verlaufen in den U-förmigen Führungsschienen 10, so dass sie seitlich sowie nach unten und nach oben gehalten werden können. Auf diese Weise kann der horizontale Rahmenteil 20 insbesondere am gebogenen Ende der Führungsschienen 10 sicher geführt und gehalten werden.

Die beiden Rahmenteile 20, 25 der ersten Bewegungsbaugruppe 2 sind mittels einer Drehverbindung 23 in Form eines Scharniers 23 bzw. eines Paares von Scharnieren 23 derart miteinander verbunden, dass der ansonsten horizontal ausgerichtete horizontale Rahmenteil 20 um die Drehachse der Scharniere 23 in die Vertikale hochgeklappt werden kann und sich dann im Wesentlichen parallel zu dem stets vertikal ausgerichteten vertikalen Rahmenteil 25 erstreckt. Dies ermöglicht ein kompaktes Verstauen des horizontalen Rahmenteils 20 bei vollständig eingefahrenem System 1, 2, 3. Die Scharniere 23 sind zwischen den zweiten Rollen 23 angeordnet.

Die beiden Rahmenteile 20, 25 sind mit einem Paar verkürzbarer Verbindungselemente 24 derart miteinander verbunden, dass bei horizontaler Ausrichtung des horizontalen Rahmenteils 20 die verkürzbaren Verbindungselemente 24 ihre maximale Länge aufweisen, sich diagonal zwischen den beiden Rahmenteilen 20, 25 erstrecken und Kräfte zwischen den beiden Rahmenteilen 20, 25 übertragen können. Wird der horizontale Rahmenteil 20 über das gebogene Ende der Führungsschienen 10 hochgeklappt, so können die verkürzbaren Verbindungselemente 24 ihre Längen verkürzen. Hierzu sind die verkürzbaren Verbindungselemente 24 als Stahlseile ausgebildet.

Die zweite Bewegungsbaugruppe 3 weist einen vertikalen Rahmenteil 30 und einen horizontalen Rahmenteil 32 auf, die ebenfalls mit einem Paar von Verbindungselementen 33 kraftübertragend diagonal miteinander verbunden sind. Die beiden Rahmenteile 30, 32 sind jedoch rechtwinklig starr zueinander angeordnet und die Verbindungselemente 33 sind entsprechend starr ausgebildet und angeordnet. Die Verbindungselemente 33 sind dabei über jeweils seitlich in Richtung der Längsachse X hervorragende Vorsprünge 31 des vertikalen Rahmenteils 30 mit diesem verbunden. Der horizontale Rahmenteil 32 weist jeweils seitlich außen in Richtung der Querachse Y eine Mehrzahl von Bewegungselementen 34 in Form von Rollen 34 auf, die in Richtung der Längsachse X angeordnet sind.

Die Führungsbaugruppe 1 ist stationär an z.B. einem Wohnmobil (nicht dargestellt) in dessen Innerem angeordnet und befindet sich in einem Aufnahmeraum (nicht dargestellt), der nach außen z.B. durch eine Klappe (nicht dargestellt) verschlossen werden kann und der Aufnahme eines Gegenstandes wie z.B. eines zusätzlichen Pkw dient.

Die erste Bewegungsbaugruppe 2 ist beweglich mit der Führungsbaugruppe 1 verbunden, wobei die erste Bewegungsbaugruppe 2 durch einen Riemenantrieb (nicht dargestellt) gegenüber der Führungsbaugruppe 1 in Richtung der Längsachse X bewegt werden kann. Hierzu verlaufen das erste Paar von Rollen 21 und das zweite Paar von Rollen 22 der ersten Bewegungsbaugruppe 2 in den U-förmigen Führungsschienen 10. Aufgrund der Scharniere 23 sowie der verkürzbaren Verbindungselemente 24 kann der erste Paar von Rollen 21 der ersten Bewegungsbaugruppe 2 dem gebogenen Verlauf der Führungsschienen 10 folgen, so dass der horizontale Rahmenteil 20 der ersten Bewegungsbaugruppe 2 hochgeklappt werden kann.

Die erste Bewegungsbaugruppe 2 kann in Richtung der Längsachse X so weit über die Außenmaße der Führungsbaugruppe 1, d.h. über die horizontal verlaufenden Enden der Führungsschienen 10, hinausverfahren werden, so dass die zweite Bewegungsbaugruppe 3 vollständig in Richtung der Längsachse X außerhalb der Außenmaße der Führungsbaugruppe 1 positioniert und dann frei vertikal nach unten in Richtung der Hochachse Z verfahren werden kann, um die aufgenommenen Gegenstände auf den Boden abzusetzen.

Der vertikale Rahmenteil 30 der zweiten Bewegungsbaugruppe 3 ist im Wesentlichen innerhalb des vertikalen Rahmenteils 25 der ersten Bewegungsbaugruppe 2 angeordnet und kann gegenüber diesem mittels eines im Inneren des vertikalen Rahmenteils 25 der ersten Bewegungsbaugruppe 2 angeordneten Spindelantriebs (nicht dargestellt) in Richtung der Hochachse Z verfahren werden. Die Vorsprünge 31 des vertikalen Rahmenteils 30 der zweiten Bewegungsbaugruppe 3 verlaufen dabei in vertikalen Aussparungen 26 des vertikalen Rahmenteils 25 der ersten Bewegungsbaugruppe 2, so dass sie diese Bewegung nicht behindern und die kraftübertragende Verbindung zum horizontalen Rahmenteil 32 der zweiten Bewegungsbaugruppe 3 herstellen können.

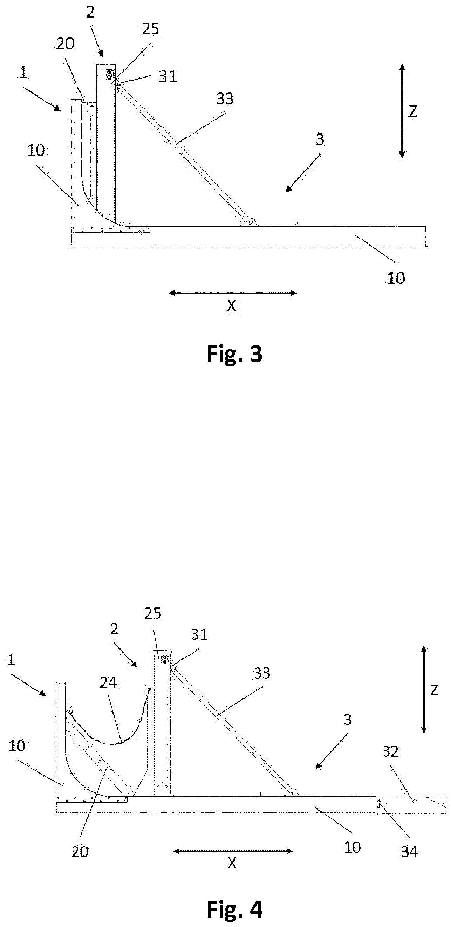

Die Fig. 3 bis 6 zeigen seitliche schematische Darstellungen eines erfindungsgemäßen System 1, 2, 3 in einer Ausfahrbewegung von einem vollständig horizontal eingefahrenen Zustand bis zu einem vollständig vertikal ausgefahrenen Zustand.

Zu Beginn der Ausfahrbewegung befindet sich das System 1, 2, 3 vollständig eingefahren z.B. im Inneren eines Wohnmobils (nicht dargestellt) und hat einen Gegenstand z.B. in Form eines Pkw (nicht dargestellt) auf dem horizontalen Rahmenteil 32 der zweiten Bewegungsbaugruppe 3 aufgenommen. Das System 1, 2, 3 kann in Richtung der Längsachse X des Wohnmobils, d.h. in Fahrtrichtung, oder auch in Richtung der Querachse Y angeordnet sein. Die zweite Bewegungsbaugruppe 3 ist in diesem Zustand vertikal derart positioniert, so dass sie eine horizontale Bewegung der ersten Bewegungsbaugruppe 2 nicht behindern kann. Die erste Bewegungsbaugruppe 2 ist maximal in die Führungsbaugruppe 1 eingefahren und der horizontale Rahmenteil 20 der ersten Bewegungsbaugruppe 2 ist hierzu vertikal hochgeklappt, so dass er parallel zum vertikalen Rahmenteil 25 der ersten Bewegungsbaugruppe 2 angeordnet ist. In diesem Zustand ist das System 1, 2, 3 kompakt angeordnet, so dass der Raum im Inneren des Wohnmobils im Wesentlichen für den aufgenommenen Gegenstand genutzt werden kann, vgl. Fig. 3.

Zum Ausbringen dieses Gegenstands ist zunächst z.B. eine Klappe an der Außenwand des Wohnmobils (nicht dargestellt) zu öffnen, um den Aufnahmeraum im Inneren freizugeben. Ggfs. sind Sicherungsmittel, die das System 1, 2, 3 im eingefahrenen Zustand sichern sollen, freizugeben bzw. zu entfernen.

Dann können die beiden Bewegungsbaugruppen 2, 3 gemeinsam mit dem aufgenommenen Gegenstand horizontal in Richtung der Längsachse X gegenüber der Führungsbaugruppe 1 ausgefahren werden (in den Fig. 3 bis 6 nach rechts). Die Rollen 34 des horizontalen Rahmenteils 32 der zweiten Bewegungsbaugruppe 3 rollen dabei anfangs in den Führungsschienen 10 und tragen im Wesentlichen das Gewicht der beiden Bewegungsbaugruppen 2, 3. Auch trägt das zweite Rollenpaar 22 des horizontalen Rahmenteils 20 der ersten Bewegungsbaugruppe 2 teilweise das Gewicht der beiden Bewegungsbaugruppen 2, 3. Das erste Rollenpaar 21 des horizontalen Rahmenteils 20 der ersten Bewegungsbaugruppe 2 ist in diesem Zustand noch hochgeklappt im vertikalen Bereich der Führungsschienen 10 angeordnet und das Stahlseil 24 hängt lose durch, vgl. Fig. 4. Über diese Elemente erfolgt in diesem Zustand keine wesentliche Kraftübertragung.

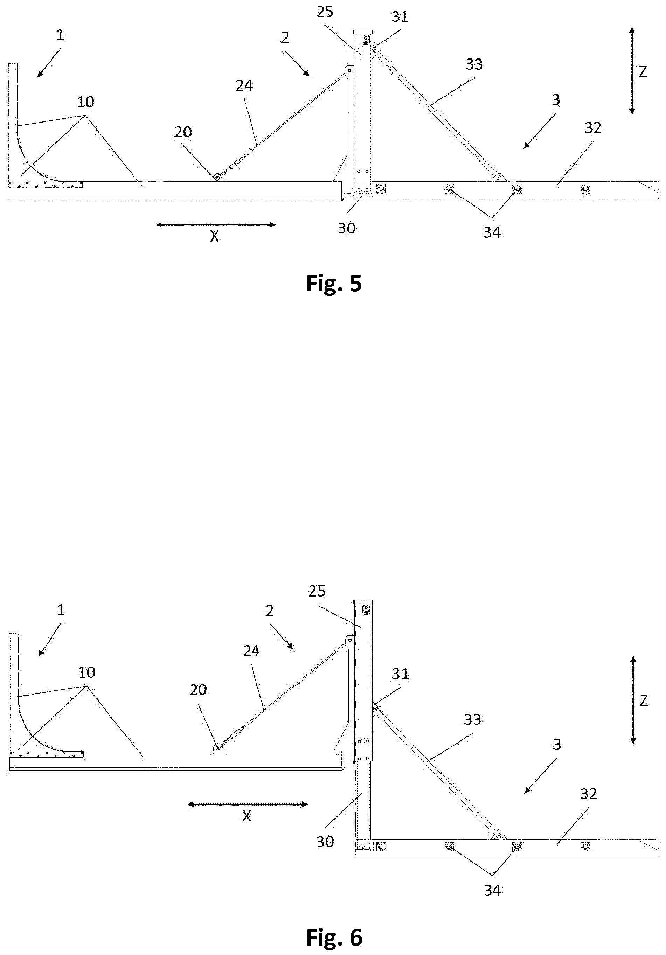

Diese horizontale Ausfahrbewegung wird fortgesetzt, bis die erste Bewegungsbaugruppe 2 vollständig horizontal in Richtung der Längsachse X verfahren ist und die zweite Bewegungsbaugruppe 3 vollständig über die Außenmaße der Führungsbaugruppe 1 hinausragt, vgl. Fig. 5. Diese horizontale Position kann durch Endanschläge (nicht dargestellt) der Führungsschienen 10 definiert sein oder über die Antriebe der Führungsbaugruppe 1 eingehalten werden.

In dieser Position haben die Rollen 34 des horizontalen Rahmenteils 32 der zweiten Bewegungsbaugruppe 3 keinen Kontakt mehr mit den Führungsschienen 10. Diesen haben sie während der horizontalen Ausfahrbewegung nacheinander verloren. Dafür ist während dieser Ausfahrbewegung der horizontale Rahmenteil 20 der ersten Bewegungsbaugruppe 2 durch das Durchfahren des Bogens der Führungsschienen 10 in seine horizontale Orientierung gelangt und die ersten Rollen 21 des horizontalen Rahmenteils 20 der ersten Bewegungsbaugruppe 2 werden dann durch die Führungsschienen 10 von oben gehalten. Auf diese Weise können die ersten Rollen 21 des horizontalen Rahmenteils 20 der ersten Bewegungsbaugruppe 2 das Gewicht der beiden Bewegungsbaugruppen 2, 3 auf die Führungsschienen 10 zunehmend übertragen und diese Aufgaben im Laufe der horizontalen Ausfahrbewegung von den Rollen 34 des horizontalen Rahmenteils 32 der zweiten Bewegungsbaugruppe 3 vollständig übernehmen. Die Stahlseile 24 werden hierdurch gespannt und tragen einen wesentlichen Teil dieser Gewichtskraft.

In dieser horizontal ausgefahrenen Position ragt die zweite Bewegungsbaugruppe 3 mit dem aufgenommenen Gegenstand aus dem Inneren des Wohnmobils heraus, so dass der Gegenstand bei Bedarf bereits in dieser Position für den Benutzer zugänglich sein kann. Um den Gegenstand jedoch auf den Boden abzusetzen, kann nun die zweite Bewegungsbaugruppe 3 vertikal in Richtung der Hochachse Z nach unten verfahren werden. Hierzu senken die Antriebe der ersten Bewegungsbaugruppe 2 den vertikalen Rahmenteil 30 der zweiten Bewegungsbaugruppe 3 ab. Die Vorsprünge 31 des vertikalen Rahmenteils 30 der zweiten Bewegungsbaugruppe 3 gleiten dabei blockadefrei in den entsprechenden vertikalen Aussparungen 26 des vertikalen Rahmenteils 25 der ersten Bewegungsbaugruppe 2.

Am Ende dieser vertikalen Ausfahrbewegung ist der horizontale Rahmenteil 32 der zweiten Bewegungsbaugruppe 3 auf dem Boden abgesetzt, so dass der Gegenstand ebenerdig entnommen werden kann, vgl. Fig. 6. Beispielsweise kann ein Pkw vom Benutzer bequem seitlich bestiegen und von dem horizontalen Rahmenteil 32 der zweiten Bewegungsbaugruppe 3 herunter gefahren werden. Dies gilt ebenso für ein Beiboot einer Yacht, wobei hier der horizontale Rahmenteils 32 der zweiten Bewegungsbaugruppe 3 ins Wasser hinein abzusenken wäre. Ebenso können Gerätschaften wie z.B. Notstromaggregate auf diese Weise ebenerdig entladen werden.

Ein Vorgang zum Aufnehmen eines Gegenstandes in dem Wohnmobil mittels des erfindungsgemäßen Systems 1, 2, 3 läuft in umgekehrter Reihenfolge ab.

### BEZUGSZEICHENLISTE (Teil der Beschreibung)

- X: X-Achse, Längsachse
- Y: Y-Achse, Querachse
- Z: Z-Achse, Hochachse, vertikale Richtung

- 1: Führungsbaugruppe
- 10: Führungsschienen
- 11: seitliche Verbindungselemente der Führungsschienen 10

- 2: erste Bewegungsbaugruppe
- 20: horizontaler Rahmenteil der ersten Bewegungsbaugruppe 2
- 21: erstes Führungselement bzw. erste Rolle des horizontalen Rahmenteils 20
- 22: zweites Führungselement bzw. zweite Rolle des horizontalen Rahmenteils 20
- 23: Drehverbindung bzw. Scharnier zwischen horizontalem Rahmenteil 20 und vertikalem Rahmenteil 25 der ersten Bewegungsbaugruppe 2
- 24: verkürzbare Verbindungselemente bzw. diagonale Streben zwischen horizontalem Rahmenteil 20 und vertikalem Rahmenteil 25 der ersten Bewegungsbaugruppe 2
- 25: vertikaler Rahmenteil der ersten Bewegungsbaugruppe 2
- 26: vertikale Aussparungen bzw. Schlitze des vertikalen Rahmenteils 25

- 3: zweite Bewegungsbaugruppe
- 30: vertikaler Rahmenteil der zweiten Bewegungsbaugruppe 3
- 31: Vorsprünge des vertikalen Rahmenteils 30
- 32: horizontaler Rahmenteil der zweiten Bewegungsbaugruppe 3
- 33: starre Verbindungselemente bzw. diagonale Streben zwischen vertikalem Rahmenteil 30 und horizontalem Rahmenteil 32 der zweiten Bewegungsbaugruppe 3
- 34: Bewegungselemente bzw. Rollen des horizontalen Rahmenteils 32 der zweiten Bewegungsbaugruppe 3

## Patentansprüche

1. System (1, 2, 3) zur Aufnahme von Gegenständen, mit
einer Führungsbaugruppe (1), welche stationär angeordnet werden kann,
einer ersten Bewegungsbaugruppe (2), welche mit der Führungsbaugruppe (1) verbunden ist und welche gegenüber der Führungsbaugruppe (1) in Richtung einer Längsachse (X) horizontal beweglich sein kann, und
einer zweiten Bewegungsbaugruppe (3), welche mit der ersten Bewegungsgruppe (2) verbunden ist und welche gegenüber der ersten Bewegungsbaugruppe (2) in Richtung einer Hochachse (Z) vertikal beweglich sein und die Gegenstände aufnehmen kann, wobei die erste Bewegungsbaugruppe (2) in Richtung der Längsachse (X) soweit über die Führungsbaugruppe (1) hinaus bewegt werden kann, dass die zweite Bewegungsbaugruppe (3) gegenüber der ersten Bewegungsbaugruppe (2) an der Führungsbaugruppe (1) vorbei in Richtung der Hochachse (Z) bewegt werden kann, wobei die erste Bewegungsbaugruppe (2) einen horizontalen Rahmenteil (20) und einen vertikalen Rahmenteil (25) aufweist,
wobei der horizontale Rahmenteil (20) der ersten Bewegungsbaugruppe (2) die erste Bewegungsbaugruppe (2) in Richtung der Längsachse (X) beweglich mit der Führungsbaugruppe (1) verbindet, und
wobei der vertikale Rahmenteil (25) der ersten Bewegungsbaugruppe (2) die zweite Bewegungsbaugruppe (3) in Richtung der Hochachse (Z) beweglich mit der ersten Bewegungsbaugruppe (2) verbindet,
wobei der horizontale Rahmenteil (20) der ersten Bewegungsbaugruppe (2) und der vertikale Rahmenteil (25) der ersten Bewegungsbaugruppe (2) durch ein diagonales Verbindungselement (24), vorzugsweise durch ein Paar von diagonalen Verbindungselementen (24), miteinander verbunden sind,
**dadurch gekennzeichnet, dass**
der horizontale Rahmenteil (20) der ersten Bewegungsbaugruppe (2) und der vertikale Rahmenteil (25) der ersten Bewegungsbaugruppe (2) durch eine Drehverbindung (23) miteinander verbunden sind, so dass der horizontale Rahmenteil (20) der ersten Bewegungsbaugruppe (2) zwischen der Richtung der Längsachse (X) und der Richtung der Hochachse (Z) gegenüber dem vertikalen Rahmenteil (25) der ersten Bewegungsbaugruppe (2) geschwenkt werden kann.

2. System (1, 2, 3) nach Anspruch 1,
wobei das Verbindungselement (24) verkürzbar ausgebildet ist.

3. System (1, 2, 3) nach einem der vorherigen Ansprüche,
wobei der horizontale Rahmenteil (20) der ersten Bewegungsbaugruppe (2) wenigstens zwei Führungselemente (21, 22), vorzugsweise zwei Rollen (21, 22), aufweist, mit denen der horizontale Rahmenteil (20) der ersten Bewegungsbaugruppe (2) beweglich mit der Führungsbaugruppe (1) verbunden ist.

4. System (1, 2, 3) nach einem der vorherigen Ansprüche,
wobei die Führungsbaugruppe (1) wenigstens eine Führungsschiene (10), vorzugsweise ein Paar von Führungsschienen (10), aufweist, in der die erste Bewegungsbaugruppe (2), vorzugsweise die Rollen (21, 22) der ersten Bewegungsbaugruppe (2), beweglich geführt werden kann bzw. können.

5. System (1, 2, 3) nach Anspruch 4,
wobei die Führungsschiene(n) (10) U-förmig ausgebildet ist/sind.

6. System (1, 2, 3) nach einem der Ansprüche 4 oder 5,
wobei die Führungsschiene(n) (10) abschnittsweise in Richtung der Hochachse (Z) hochgebogen ausgebildet ist/sind.

7. System (1, 2, 3) nach einem der vorherigen Ansprüche,
wobei die zweite Bewegungsbaugruppe (3) einen vertikalen Rahmenteil (30) und einen horizontalen Rahmenteil (32) aufweist,
wobei der vertikale Rahmenteil (30) der zweiten Bewegungsbaugruppe (3) die zweite Bewegungsbaugruppe (3) in Richtung der Hochachse (Z) beweglich mit der ersten Bewegungsbaugruppe (2) verbindet, und
wobei der horizontale Rahmenteil (32) der zweiten Bewegungsbaugruppe (3) zur Aufnahme von Gegenständen ausgebildet ist.

8. System (1, 2, 3) nach Anspruch 7,
wobei der vertikale Rahmenteil (30) der zweiten Bewegungsbaugruppe (3) gegenüber der ersten Bewegungsbaugruppe (2), insbesondere gegenüber dem vertikalen Rahmenteil (25) der ersten Bewegungsbaugruppe (2), mittels eines Spindelantriebs oder eines hydraulischen Antriebs beweglich ist.

9. System (1, 2, 3) nach Anspruch 7 oder 8,
wobei der vertikale Rahmenteil (30) der zweiten Bewegungsbaugruppe (3) innerhalb des vertikalen Rahmenteils (25) der ersten Bewegungsbaugruppe (2) in der Richtung der Hochachse (Z) beweglich angeordnet ist.

10. System (1, 2, 3) nach einem der Ansprüche 7 bis 9,
wobei der vertikale Rahmenteil (30) der zweiten Bewegungsbaugruppe (3) und der horizontale Rahmenteil (32) der zweiten Bewegungsbaugruppe (3) durch ein diagonales Verbindungselement (33), vorzugsweise durch ein Paar von diagonalen Verbindungselementen (33), miteinander verbunden sind.

11. System (1, 2, 3) nach Anspruch 10,
wobei der vertikale Rahmenteil (25) der ersten Bewegungsbaugruppe (2) wenigstens eine vertikale Aussparung (26), vorzugsweise ein Paar vertikaler Aussparungen (26), aufweist, in der ein Vorsprung (31), vorzugsweise in denen Vorsprünge (31), des vertikalen Rahmenteils (30) der zweiten Bewegungsbaugruppe (3) vertikal beweglich verlaufen kann bzw. können,
wobei das diagonale Verbindungselement (33) über den Vorsprung (31) mit dem vertikalen Rahmenteil (30) der zweiten Bewegungsbaugruppe (3) verbunden ist.

12. System (1, 2, 3) nach einem der vorherigen Ansprüche,
wobei die zweite Bewegungsbaugruppe (3), vorzugsweise der horizontale Rahmenteil (32) der zweiten Bewegungsbaugruppe (3), eine Mehrzahl von Bewegungselementen (34), vorzugsweise eine Mehrzahl von Rollen (34), aufweist, mittels derer die zweite Bewegungsbaugruppe (3) gegenüber der Führungsbaugruppe (1) in Richtung der Längsachse (X) beweglich geführt werden kann.

## Claims

1. System (1, 2, 3) for receiving objects, comprising a guide assembly (1), which can be stationary, a first movement assembly (2), which is connected to the guide assembly (1) and which can be horizontally movable with respect to the guide assembly (1) in the direction of a longitudinal axis (X), and a second movement assembly (3), which is connected to the first movement group (2) and which can be vertically movable with respect to the first movement assembly (2) in the direction of a vertical axis (Z) and can receive the objects, the first movement assembly (2) being able to be moved beyond the guide assembly (1) in the direction of the longitudinal axis (X) to such an extent that the second movement assembly (3) can be moved, with respect to the first movement assembly (2), past the guide assembly (1) in the direction of the vertical axis (Z), the first movement assembly (2) having a horizontal frame part (20) and a vertical frame part (25), the horizontal frame part (20) of the first movement assembly (2) connecting the first movement assembly (2) to the guide assembly (1) so as to be movable in the direction of the longitudinal axis (X), and the vertical frame part (25) of the first movement assembly (2) connecting the second movement assembly (3) to the first movement assembly (2) so as to be movable in the direction of the vertical axis (Z), the horizontal frame part (20) of the first movement assembly (2) and the vertical frame part (25) of the first movement assembly (2) being connected to one another by a diagonal connecting element (24), preferably by a pair of diagonal connecting elements (24), **characterized in that** the horizontal frame part (20) of the first movement assembly (2) and the vertical frame part (25) of the first movement assembly (2) are connected to one another by a rotary connection (23), so that the horizontal frame part (20) of the first movement assembly (2) can be pivoted relative to the vertical frame part (25) of the first movement assembly (2) between the direction of the longitudinal axis (X) and the direction of the vertical axis (Z).

2. System (1, 2, 3) according to claim 1, wherein the connecting element (24) can be shortened.

3. System (1, 2, 3) according to either of the preceding claims, wherein the horizontal frame part (20) of the first movement assembly (2) has at least two guide elements (21, 22), preferably two rollers (21, 22), by means of which the horizontal frame part (20) of the first movement assembly (2) is movably connected to the guide assembly (1).

4. System (1, 2, 3) according to any of the preceding claims, wherein the guide assembly (1) has at least one guide rail (10), preferably a pair of guide rails (10), in which the first movement assembly (2), preferably the rollers (21, 22) of the first movement assembly (2) can be guided so as to be movable.

5. System (1, 2, 3) according to claim 4, wherein the guide rail(s) (10) is/are U-shaped.

6. System (1, 2, 3) according to either claim 4 or claim 5, wherein the guide rail(s) (10) is/are bent upwards in portions in the direction of the vertical axis (Z).

7. System (1, 2, 3) according to any of the preceding claims, wherein the second movement assembly (3) has a vertical frame part (30) and a horizontal frame part (32), wherein the vertical frame part (30) of the second movement assembly (3) connects the second movement assembly (3) to the first movement assembly (2) so as to be movable in the direction of the vertical axis (Z), and wherein the horizontal frame part (32) of the second movement assembly (3) is designed to receive objects.

8. System (1, 2, 3) according to claim 7, wherein the vertical frame part (30) of the second movement assembly (3) can be moved relative to the first movement assembly (2), in particular relative to the vertical frame part (25) of the first movement assembly (2), by means of a spindle drive or a hydraulic drive.

9. System (1, 2, 3) according to either claim 7 or claim 8, wherein the vertical frame part (30) of the second movement assembly (3) is arranged within the vertical frame part (25) of the first movement assembly (2) so as to be movable in the direction of the vertical axis (Z).

10. System (1, 2, 3) according to any of claims 7 to 9, wherein the vertical frame part (30) of the second movement assembly (3) and the horizontal frame part (32) of the second movement assembly (3) are connected to one another by a diagonal connecting element (33), preferably by a pair of diagonal connecting elements (33).

11. System (1, 2, 3) according to claim 10, wherein the vertical frame part (25) of the first movement assembly (2) has at least one vertical recess (26), preferably a pair of vertical recesses (26), in which a projection (31), preferably in which projections (31), of the vertical frame part (30) of the second movement assembly (3) can extend so as to be vertically movable, wherein the diagonal connecting element (33) is connected to the vertical frame part (30) of the second movement assembly (3) via the projection (31).

12. System (1, 2, 3) according to any of the preceding claims, wherein the second movement assembly (3), preferably the horizontal frame part (32) of the second movement assembly (3), comprises a plurality of movement elements (34), preferably a plurality of rollers (34), by means of which the second movement assembly (3) can be guided so as to be movable relative to the guide assembly (1) in the direction of the longitudinal axis (X).

## Revendications

1. Système (1, 2, 3) de réception d'objets, comportant
un module de guidage (1) qui peut être disposé de manière fixe,
un premier module de déplacement (2) qui est relié au module de guidage (1) et qui peut être déplacé horizontalement en direction d'un axe longitudinal (X) par rapport au module de guidage (1), et
un second module de déplacement (3) qui est relié au premier module de déplacement (2) et qui peut être déplacé verticalement en direction d'un axe vertical (Z) par rapport au premier module de déplacement (2) et peut recevoir les objets,
dans lequel le premier module de déplacement (2) peut être déplacé en direction de l'axe longitudinal (X) au-delà du module de guidage (1) jusqu'à ce que le second module de déplacement (3) puisse être déplacé en direction de l'axe vertical (Z) par rapport au premier module de déplacement (2) en passant le module de guidage (1),
dans lequel le premier module de déplacement (2) comprend une partie de cadre horizontale (20) et une partie de cadre verticale (25),
dans lequel la partie de cadre horizontale (20) du premier module de déplacement (2) relie de manière mobile le premier module de déplacement (2) au module de guidage (1) en direction de l'axe longitudinal (X), et
dans lequel la partie de cadre verticale (25) du premier module de déplacement (2) relie de manière mobile le second module de déplacement (3) au premier module de déplacement (2) en direction de l'axe vertical (Z),
dans lequel la partie de cadre horizontale (20) du premier module de déplacement (2) et la partie de cadre verticale (25) du premier module de déplacement (2) sont reliées entre elles par un élément de liaison diagonal (24), de préférence par une paire d'éléments de liaison diagonaux (24),
**caractérisé en ce que**
la partie de cadre horizontale (20) du premier module de déplacement (2) et la partie de cadre verticale (25) du premier module de déplacement (2) sont reliées entre elles par une liaison rotative (23), de sorte que la partie de cadre horizontale (20) du premier module de déplacement (2) peut être pivotée entre la direction de l'axe longitudinal (X) et la direction de l'axe vertical (Z) par rapport à la partie de cadre verticale (25) du premier module de déplacement (2).

2. Système (1, 2, 3) selon la revendication 1,
dans lequel l'élément de liaison (24) est conçu pour pouvoir être raccourci.

3. Système (1, 2, 3) selon l'une des revendications précédentes,
dans lequel la partie de cadre horizontale (20) du premier module de déplacement (2) comprend au moins deux éléments de guidage (21, 22), de préférence deux rouleaux (21, 22), au moyen desquels la partie de cadre horizontale (20) du premier module de déplacement (2) est reliée de manière mobile au module de guidage (1).

4. Système (1, 2, 3) selon l'une des revendications précédentes,
dans lequel le module de guidage (1) comprend au moins un rail de guidage (10), de préférence une paire de rails de guidage (10), dans lequel le premier module de déplacement (2), de préférence les rouleaux (21, 22) du premier module de déplacement (2), peut ou peuvent être guidé(s) de manière mobile.

5. Système (1, 2, 3) selon la revendication 4,
dans lequel le(s) rail(s) de guidage (10) est/sont en forme de U.

6. Système (1, 2, 3) selon l'une des revendications 4 ou 5,
dans lequel le(s) rail(s) de guidage (10) est/sont réalisé(s) en sections repliées en direction de l'axe vertical (Z).

7. Système (1, 2, 3) selon l'une des revendications précédentes,
dans lequel le second module de déplacement (3) comprend une partie de cadre verticale (30) et une partie de cadre horizontale (32),
dans lequel la partie de cadre verticale (30) du second module de déplacement (3) relie le second module de déplacement (3) au premier module de déplacement (2) de manière à ce qu'il soit mobile en direction de l'axe vertical (Z), et
dans lequel la partie de cadre horizontale (32) du second module de déplacement (3) est conçue pour recevoir des objets.

8. Système (1, 2, 3) selon la revendication 7,
dans lequel la partie de cadre verticale (30) du second module de déplacement (3) est mobile par rapport au premier module de déplacement (2), en particulier par rapport à la partie de cadre verticale (25) du premier module de déplacement (2), au moyen d'un entraînement à broche ou d'un entraînement hydraulique.

9. Système (1, 2, 3) selon la revendication 7 ou 8,
dans lequel la partie de cadre verticale (30) du second module de déplacement (3) est disposée de manière mobile à l'intérieur de la partie de cadre verticale (25) du premier module de déplacement (2) en direction de l'axe vertical (Z).

10. Système (1, 2, 3) selon l'une des revendications 7 à 9,
dans lequel la partie de cadre verticale (30) du second module de déplacement (3) et la partie de cadre horizontale (32) du second module de déplacement (3) sont reliées entre elles par un élément de liaison diagonal (33), de préférence par une paire d'éléments de liaison diagonaux (33).

11. Système (1, 2, 3) selon la revendication 10,
dans lequel la partie de cadre verticale (25) du premier module de déplacement (2) comprend au moins un évidement vertical (26), de préférence une paire d'évidements verticaux (26), dans lequel une saillie (31), de préférence dans lesquels des saillies (31), de la partie de cadre verticale (30) du second module de déplacement (3) peut/peuvent s'étendre de manière mobile verticalement, dans lequel l'élément de liaison diagonal (33) est relié à la partie de cadre verticale (30) du second module de déplacement (3) par l'intermédiaire de la saillie (31).

12. Système (1, 2, 3) selon l'une des revendications précédentes,
dans lequel le second module de déplacement (3), de préférence la partie de cadre horizontale (32) du second module de déplacement (3), comprend plusieurs éléments de déplacement (34), de préférence plusieurs rouleaux (34), au moyen desquels le second module de déplacement (3) peut être guidé de manière mobile en direction de l'axe longitudinal (X) par rapport au module de guidage (1).
